# EUROPÄISCHE PATENTANMELDUNG

(11) **EP 0 972 567 A2**
(43) Veröffentlichungstag der Anmeldung: **19.01.2000**
(21) Anmeldenummer: 99113677.1
(22) Anmeldetag: 15.07.1999
(51) Int. Cl.: B01J 21/02, B01J 23/40, C08F 8/04, C07B 31/00, C07B 35/00

(54) **Verfahren zur Umsetzung von organischen Verbindungen mit boroxidhaltigen, makroporösen Trägerkatalysatoren**

(30) Priorität: 16.07.1998 DE 19832087
(71) Anmelder: BASF AKTIENGESELLSCHAFT, 67056 Ludwigshafen (DE)
(72) Erfinder: Breitscheidel, Boris, Dr., 67117 Limburgerhof (DE); Diehlmann, Uwe, 67434 Neustadt (DE); Kindler, Alois, Dr., 67454 Hassloch (DE); Henkelmann, Jochem, Dr., 68165 Mannheim (DE); Böttcher, Arnd, Dr., 67227 Frankenthal (DE)
(74) Vertreter: Isenbruck, Günter, Dr.

(57) **Zusammenfassung**

Verfahren zur Umsetzung einer organischen Verbindung in Gegenwart eines Katalysators, der als Aktivmetall mindestens ein Metall der VIII. Nebengruppe des Periodensystems alleine oder zusammen mit mindestens einem Metall der I. oder VII. Nebengruppe des Periodensystems in einer Menge von 0,01 bis 30 Gew.-%, bezogen auf das Gesamtgewicht des Katalysators, aufgebracht auf einem Träger, umfaßt, wobei der Träger Makroporen aufweist, dadurch gekennzeichnet, daß der Träger als eine Trägerkomponente Bor(III)oxid in einer Menge von 10 bis 100 Gew.-%, bezogen auf das Gesamtgewicht des Trägers, enthält.

## Beschreibung

Die vorliegende Erfindung betrifft ein Verfahren zur Umsetzung von organischen Verbindungen in Gegenwart eines Katalysators, der mindestens ein Metall der VIII. Nebengruppe des Periodensystems, aufgebracht auf einem Träger, umfaßt, wobei der Träger Makroporen aufweist und Bor(III)oxid umfaßt. Ferner betrifft die vorliegende Erfindung einen derartigen Katalysatorträger und Katalysator an sich, sowie Verfahren zu deren Herstellung. Unter den Umsetzungen organischer Verbindungen ist im Rahmen der vorliegenden Erfindung die Hydrierung von Polymeren, die C-C-Mehrfachbindungen enthalten, besonders bevorzugt.

Für Umsetzungen organischer Verbindungen wurden in der Vergangenheit homogene und heterogene Katalysatoren beschrieben. Bezüglich des auf diesem Gebiet existierenden Standes der Technik wird auf die EP-A 0 814 098 verwiesen. Diese Anmeldung betrifft ein Verfahren zur Umsetzung von organischen Verbindungen in Gegenwart eines Katalysators, der Ruthenium oder Palladium und ggf. ein oder mehrere weitere Metall(e) der I., VII. oder VIII. Nebengruppe des Periodensystems als Aktivmetalle auf einem Träger enthält, wobei dieser Träger eine spezielle Porengrößenverteilung und sowohl Meso- als auch Makroporen aufweist. Darüber hinaus wird in dieser Anmeldung der einschlägige Stand der Technik ausführlich beschrieben.

In Anbetracht des genannten und darin zitierten Standes der Technik liegt der vorliegenden Erfindung die primäre Aufgabe zugrunde, ein weiter verbessertes Verfahren zur Umsetzung organischer Verbindungen, insbesondere zur selektiven Hydrierung von C-C-Mehrfachbindungen aufweisenden Polymeren bereitzustellen, das hohe Umsätze bei hohen Katalysatorbelastungen sowie lange Katalysatorstandzeiten ermöglicht, ohne weitere, im Polymer vorhandene hydrierbare Einheiten, wie z.B. aromatische Einheiten oder Nitril- oder Alkoholgruppen, anzugreifen.

Überraschenderweise wurde nun gefunden, daß diese Aufgabe durch die Verwendung eines Katalysators, der einen Bor(III)oxid enthaltenden, Makroporen aufweisenden Träger umfaßt, gelöst werden kann. Der verwendete Katalysator liefert die gewünschte Zielverbindung mit hoher Selektivität auch bei hoher Katalysatorbelastung, wobei lange Katalysatorstandzeiten erzielt werden können.

Demgemäß betrifft die vorliegende Erfindung ein Verfahren zur Umsetzung einer organischen Verbindung in Gegenwart eines Katalysators, der als Aktivmetall mindestens ein Metall der VIII. Nebengruppe des Periodensystems alleine oder zusammen mit mindestens einem Metall der I. oder VII. Nebengruppe des Periodensystems in einer Menge von 0,01 bis 30 Gew.-%, bezogen auf das Gesamtgewicht des Katalysators, aufgebracht auf einem Träger, umfaßt, wobei der Träger Makroporen aufweist, dadurch gekennzeichnet, daß der Träger als eine Trägerkomponente Bor(III)oxid in einer Menge von 10 bis 100 Gew.-%, bezogen auf das Gesamtgewicht des Trägers, enthält.

### VERBINDUNGEN

Der Begriff *"organische Verbindung"*, wie er im Rahmen der vorliegenden Erfindung verwendet wird, umfaßt alle organischen Verbindungen, die katalytisch umgesetzt werden können, insbesondere solche, die mit Wasserstoff zu behandelnde Gruppen, wie z.B. C-C-Doppel- oder C-C-Dreifach-Bindungen, aufweisen. Er umfaßt sowohl niedermolekulare organische Verbindungen als auch Polymere. "Niedermolekulare organische Verbindungen" sind dabei Verbindungen mit einem Gewichtsmittel des Molekulargewichts von unter 500. Der Begriff *"Polymer"* ist dahingehend definiert, daß er Moleküle mit einem Gewichtsmittel des Molekulargewichts von mehr als ungefähr 500 bezeichnet.

Die vorliegende Erfindung betrifft insbesondere ein Verfahren zur Umsetzung einer organischen Verbindung in Gegenwart eines Katalysators, wie hierin definiert, wobei die Umsetzung eine Hydrierung, Dehydrierung, Hydrogenolyse, aminierende Hydrierung oder Dehalogenierung, weiterbevorzugt eine Hydrierung ist.

Dabei können insbesondere organische Verbindungen eingesetzt werden, die eine oder mehrere der folgenden Struktureinheiten aufweisen:

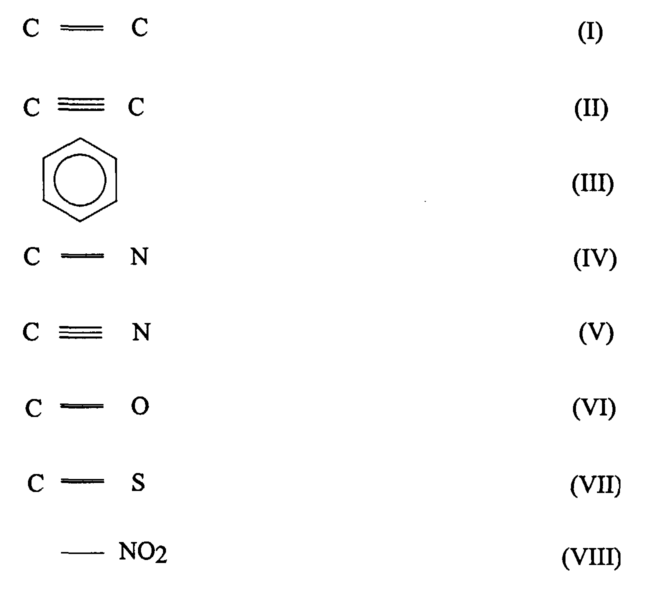

Besonders geeignet ist das erfindungsgemäße Verfahren zur Umsetzung, vorzugsweise Hydrierung, einer organischen Verbindung, die ausgewählt wird aus der Gruppe bestehend aus einer aromatischen Verbindung, in der mindestens eine Hydroxylgruppe an einen aromatischen Kern gebunden ist, einer aromatischen Verbindung, in der mindestens eine Aminogruppe an einen aromatischen Kern gebunden ist, einem Keton, einem Aldehyd, einer Carbonsäure oder einem Derivat davon, einem Polymer, das mindestens eine C-C-Doppelbindung aufweist, einem Polymer, das mindestens eine C=O-Gruppe aufweist, einem Polymer, das mindestens eine C=N-Gruppe aufweist, und einem Gemisch aus zwei oder mehr davon.

Im Rahmen des erfindungsgemäßen Verfahrens können auch organische Verbindungen umgesetzt werden, die Einheiten verschiedener Strukturen, wie oben definiert, enthalten, z.B. organische Verbindungen, die sowohl C-C-Mehrfachbindungen als auch Carbonylgruppen aufweisen, da die im Rahmen des erfindungsgemäßen Verfahrens verwendeten Katalysatoren in der Lage sind, zunächst eine der beiden Gruppen selektiv umzusetzen, vorzugsweise zu hydrieren, d.h. eine Hydrierung dieser Gruppen von ungefähr 90 bis 100% zu erreichen, während zunächst gleichzeitig die anderen Gruppen zu weniger als 25% und im allgemeinen in einem Bereich von 0 bis ungefähr 7% umgesetzt, vorzugsweise hydriert werden. Dabei werden im allgemeinen zunächst die C-C-Mehrfachbindungen und anschließend die C=O-Gruppen umgesetzt bzw. hydriert.

Der Begriff *"aromatische Verbindung, in der mindestens eine Hydroxylgruppe an einen aromatischen Kern gebunden ist"* bzw. *"aromatische Verbindung in der mindestens eine Aminogruppe an einen aromatischen Kern gebunden ist"* steht für alle Verbindungen, die eine Einheit der folgenden Struktur (IX) aufweisen: 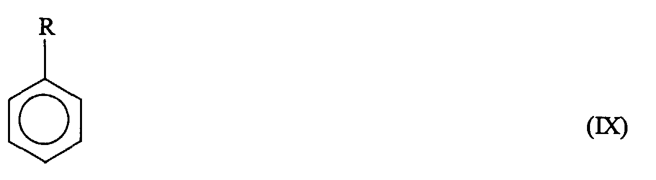 wobei R eine Hydroxyl- oder eine Aminogruppe darstellt.

Sofern im Rahmen des erfindungsgemäßen Verfahrens aromatische Verbindungen eingesetzt werden, in denen mindestens eine Hydroxylgruppe und ferner mindestens ein gegebenenfalls substituierter C₁₋₁₀-Alkylrest und/oder -Alkoxyrest an einen aromatischen Kern gebunden ist, kann je nach Reaktionsbedingungen (Temperatur, Lösungsmittel) das erhaltene Isomerenverhältnis von cis- zu transkonfigurierten Produkten in einem weiten Bereich variiert werden. Ferner können die erhaltenen Verbindungen ohne weitere Reinigungsschritte weiterverarbeitet werden. Dabei wird die Bildung von Alkylbenzolen praktisch vollständig vermieden.

Wie auch die oben beschriebenen Verbindungen, in denen mindestens eine Hydroxylgruppe an einen aromatischen Kern gebunden ist, können im Rahmen des erfindungsgemäßen Verfahrens auch aromatische Verbindungen, in denen mindestens eine Aminogruppe an einen aromatischen Kern gebunden ist, mit hoher Selektivität zu den entsprechenden cycloaliphatischen Verbindungen hydriert werden, wobei für die zusätzlich mit einem C₁₋₁₀-Alkylrest und/oder -Alkoxyrest substituierten Amine bezüglich des Verhältnisses der cis- und trans-Isomeren das oben Gesagte gilt.

Insbesondere wird im Rahmen dieser Ausführungsform die Bildung von Desaminierungsprodukten, wie beispielsweise Cyclohexanen oder teilhydrierten Dimerisierungsprodukten wie Phenylcyclohexylaminen, praktisch vollständig vermieden.

Im einzelnen können im Rahmen des erfindungsgemäßen Verfahrens folgende Verbindungen umgesetzt werden:

### Aromatische Verbindungen, in denen mindestens eine Hydroxylgruppe an einen aromatischen Kern gebunden ist

Mit dem erfindungsgemäßen Verfahren können aromatische Verbindungen, in denen mindestens eine Hydroxylgruppe und vorzugsweise ferner mindestens ein gegebenenfalls substituierter C₁₋₁₀-Alkylrest und/oder Alkoxyrest an einen aromatischen Kern gebunden ist, umgesetzt, vorzugsweise zu den entsprechenden cycloaliphatischen Verbindungen hydriert werden, wobei auch Gemische zweier oder mehr dieser Verbindungen eingesetzt werden können. Dabei können die aromatischen Verbindungen einkernige oder mehrkernige aromatische Verbindungen sein. Die aromatischen Verbindungen enthalten mindestens eine Hydroxylgruppe, die an einen aromatischen Kern gebunden ist, wobei die einfachste Verbindung dieser Gruppe Phenol ist. Vorzugsweise weisen die aromatischen Verbindungen eine Hydroxylgruppe pro aromatischem Kern auf. Die aromatischen Verbindungen können an dem aromatischen Kern oder den aromatischen Kernen substituiert sein durch einen oder mehrere Alkyl- und/oder Alkoxyreste, vorzugsweise C₁₋₁₀-Alkyl- und/oder Alkoxyreste, besonders bevorzugt C₁₋₁₀-Alkylreste, insbesondere Methyl-, Ethyl-, Propyl-, Isopropyl-, Butyl-, Isobutyl-, tert-Butylreste; unter den Alkoxyresten sind die C₁₋₈-Alkoxyreste, wie z.B. Methoxy-, Ethoxy-, Propoxy-, Isopropoxy-, Butoxy-, Isobutoxy-, tert-Butoxy-Reste, bevorzugt. Der aromatische Kern oder die aromatischen Kerne sowie die Alkyl- und Alkoxyreste können gegebenenfalls durch Halogenatome, insbesondere Fluoratome, substituiert sein oder andere geeignete inerte Substituenten aufweisen.

Vorzugsweise weisen die erfindungsgemäß umsetzbaren, vorzugsweise hydrierbaren Verbindungen mindestens einen, vorzugsweise einen bis vier, insbesondere einen C₁₋₁₀-Alkylrest auf, der sich vorzugsweise am gleichen aromatischen Kern befindet wie die mindestens eine Hydroxylgruppe. Bevorzugte Verbindungen sind (Mono)alkylphenole, wobei der Alkylrest in o-, m- oder p-Position zur Hydroxylgruppe stehen kann. Insbesondere bevorzugt sind trans-Alkylphenole, auch als 4-Alkylphenole bezeichnet, wobei der Alkylrest vorzugsweise 1 bis 10 Kohlenstoffatome aufweist und insbesondere ein tert-Butylrest ist. Bevorzugt ist 4-tert-Butylphenol. Erfindungsgemäß verwendbare mehrkernige aromatische Verbindungen sind beispielsweise β-Naphthol und α-Naphthol.

Die aromatischen Verbindungen, in denen mindestens eine Hydroxylgruppe und vorzugsweise ferner mindestens ein gegebenenfalls substituierter C₁₋₁₀-Alkylrest und/oder Alkoxyrest an einen aromatischen Kern gebunden ist, können auch mehrere aromatische Kerne aufweisen, die über einen Alkylenrest, vorzugsweise eine Methylengruppe, verknüpft sind. Die verknüpfende Alkylengruppe, vorzugsweise Methylengruppe, kann einen oder mehrere Alkylsubstituenten aufweisen, die C₁₋₂₀-Alkylreste sein können und vorzugsweise C₁₋₁₀-Alkylreste, besonders bevorzugt Methyl-, Ethyl-, Propyl-, Isopropyl-, Butyl- oder tert-Butylreste, sind.

Dabei kann jeder der aromatischen Kerne mindestens eine Hydroxylgruppe gebunden enthalten. Beispiele solcher Verbindungen sind Bisphenole, die in 4-Position über einen Alkylenrest, vorzugsweise einen Methylenrest, verknüpft sind.

Insbesondere bevorzugt umgesetzt wird im Rahmen des erfindungsgemäßen Verfahrens ein mit einem C₁₋₁₀-Alkylrest, vorzugsweise einem C₁₋₆-Alkylrest substituiertes Phenol, wobei der Alkylrest gegebenenfalls mit einem aromatischen Rest substituiert ist, oder Gemische aus zwei oder mehr dieser Verbindungen.

In einer weiteren bevorzugten Ausführungsform dieses Verfahrens wird p-tert-Butylphenol, Bis(p-hydroxyphenyl)dimethylmethan oder ein Gemisch davon umgesetzt.

### Aromatische Verbindungen, in denen mindestens eine Aminogruppe an einen aromatischen Kern gebunden ist

Mit dem erfindungsgemäßen Verfahren können ferner aromatische Verbindungen, in denen mindestens eine Aminogruppe an einen aromatischen Kern gebunden ist, umgesetzt, vorzugsweise zu den entsprechenden cycloaliphatischen Verbindungen hydriert werden, wobei auch Gemische aus zwei oder mehr dieser Verbindungen eingesetzt werden können. Dabei können die aromatischen Verbindungen einkernige oder mehrkernige aromatische Verbindungen sein. Die aromatischen Verbindungen enthalten mindestens eine Aminogruppe, die an einen aromatischen Kern gebunden ist. Vorzugsweise sind die aromatischen Verbindungen aromatische Amine oder Diamine. Die aromatischen Verbindungen können an dem aromatischen Kern oder den aromatischen Kernen oder an der Aminogruppe substituiert sein durch einen oder mehrere Alkyl- und/oder Alkoxyreste, vorzugsweise C₁₋₂₀-Alkylreste, insbesondere Methyl-, Ethyl-, Propyl-, Isopropyl-, Butyl-, Isobutyl-, tert-Butylreste; unter den Alkoxyresten sind die C₁₋₈-Alkoxyreste, wie z.B. Methoxy-, Ethoxy-, Propoxy-, Isopropoxy-, Butoxy-, Isobutoxy-, tert-Butoxy-Reste, bevorzugt. Der aromatische Kern oder die aromatischen Kerne sowie die Alkyl- und Alkoxyreste können gegebenenfalls durch Halogenatome, insbesondere Fluoratome, substituiert sein oder andere geeignete inerte Substituenten aufweisen.

Die aromatische Verbindung, in der mindestens eine Aminogruppe an einen aromatischen Kern gebunden ist, kann auch mehrere aromatische Kerne aufweisen, die über eine Alkylengruppe, vorzugsweise eine Methylengruppe verknüpft sind. Die verknüpfende Alkylengruppe, vorzugsweise Methylengruppe, kann einen oder mehrere Alkylsubstituenten aufweisen, die C₁₋₂₀-Alkylreste sein können und vorzugsweise C₁₋₁₀-Alkylreste, besonders bevorzugt Methyl-, Ethyl-, Propyl-, Isopropyl-, Butyl-, sec-Butyl- oder tert-Butylreste sind.

Die an den aromatischen Kern gebundene Aminogruppe kann ebenfalls durch einen oder zwei der vorstehend beschriebenen Alkylreste substituiert sein.

Besonders bevorzugte Verbindungen sind Anilin, Naphthylamin, Diaminobenzole, Diaminotoluole und Bis-p-aminophenylmethan oder Gemische davon.

### C=O-Gruppen enthaltende Verbindungen

Mit dem erfindungsgemäßen Verfahren können C=O-Gruppen enthaltende Verbindungen, also insbesondere Aldehyde, Ketone, Carbonsäuren und deren Derivate, wie z.B. Carbonsäureester, Carbonsäurehalogenide und Carbonsäureanhydride sowie Gemische aus zwei oder mehr der oben genannten Verbindungen umgesetzt, insbesondere hydriert werden.

Dabei werden insbesondere Aldehyde und Ketone, vorzugsweise solche mit 1 bis 20 C-Atomen, wie z.B. Formaldehyd, Acetaldehyd, Propionaldehyd, n-Butyraldehyd, Valeraldehyd, Caproaldehyd, Heptaldehyd, Phenylacetaldehyd, Acrolein, Crotonaldehyd, Benzaldehyd, o-Tolualdehyd, m-Tolualdehyd, p-Tolualdehyd, Salicylaldehyd, Anisaldehyd, Vanillin, Zimtaldehyd, Aceton, Methylethylketon, 2-Pentanon, 3-Pentanon, 2-Hexanon, 3-Hexanon, Cyclohexanon, Isophoron, Methylisobutylketon, Mesityloxid, Acetophenon, Propiophenon, Benzophenon, Benzalaceton, Dibenzalaceton, Benzalacetophenon, Glycolaldehyd, Glyceraldehyd, Glyoxal, 2,3-Butandion, 2,4-Pentandion, 2,5-Hexandion, Terephthaldialdehyd, Glutardialdehyd, Diethylketon, Methylvinylketon, Acetylaceton, 2-Ethylhexanal oder Gemische aus zwei oder mehr davon eingesetzt.

Ferner kommen auch Polyketone, wie z.B. Ethylen/CO-Copolymere zum Einsatz.

Ferner lassen sich Carbonsäuren und Derivate davon umsetzen, wobei solche mit 1 bis 20 C-Atomen bevorzugt sind. Im einzelnen zu nennen sind:

Carbonsäuren, wie z.B. Ameisensäure, Essigsäure, Propionsäure, Buttersäure, Isobuttersäure, n-Valeriansäure, Trimethylessigsäure ("Pivalinsäure"), Capronsäure, Önanthsäure, Caprylsäure, Caprinsäure, Laurinsäure, Myristinsäure, Palmitinsäure, Stearinsäure, Acrylsäure, Methacrylsäure, Ölsäure, Elaidinsäure, Linolsäure, Linolensäure, Cyclohexancarbonsäure, Benzoesäure, Phenylessigsäure, o-Toluylsäure, m-Toluylsäure, p-Toluylsäure, o-Chlorbenzoesäure, p-Chlorbenzoesäure, o-Nitrobenzoesäure, p-Nitrobenzoesäure, Salicylsäure, p-Hydroxybenzoesäure, Anthranilsäure, p-Aminobenzoesäure, Oxalsäure, Malonsäure, Bernsteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephthalsäure;

Carbonsäurehalogenide, wie z.B. die Chloride oder Bromide der oben genannten Carbonsäuren, insbesondere Acetylchlorid oder -bromid, Stearylchlorid oder - bromid und Benzoylchlorid oder -bromid, die insbesondere dehalogeniert werden;

Carbonsäureester, wie z.B. die C₁-C₁₀-Alkylester der oben genannten Carbonsäuren, insbesondere Methylformiat, Essigester, Buttersäurebutylester, Terephthalsäuredimethylester, Adipinsäuredimethylester, (Meth)acrylsäuremethylester, Butyrolacton, Caprolacton und Polycarbonsäureester, wie z.B. Polyacryl- und Polymethacrylsäureester und deren Copolymere und Polyester, wie z.B. Polymethylmethacrylat, wobei hier insbesondere Hydrogenolysen, also die Umsetzung von Estern zu den entsprechenden Säuren und Alkoholen, durchgeführt werden;

Carbonsäureanhydride, wie z.B. die Anhydride der oben genannten Carbonsäuren, insbesondere Essigsäureanhydrid, Propionsäureanhydrid, Benzoesäureanhydrid und Maleinsäureanhydrid.

Carbonsäureamide, wie z.B. Formamid, Acetamid, Propionamid, Stearamid, Terephthalsäureamid.

Ferner können auch Hydroxycarbonsäuren, wie z.B. Milch-, Äpfel-, Wein- oder Zitronensäure, oder Aminosäuren, wie z.B. Glycin, Alanin, Prolin und Arginin, umgesetzt werden.

### Nitrile

Ferner können auch Nitrile umgesetzt werden, vorzugsweise aliphatische und aromatische Mono- und Dinitrile, wie z.B. Acetonitril, Propionitril, Butyronitril, Stearinsäurenitril, Isocrotonsäurenitril, 3-Butennitril, Propinnitril, 3-Butinnitril, 2,3-Butadiennitril, 2,4-Pentadiennitril, 3-Hexen-1,6-dinitril, Chloracetonitril, Trichloracetonitril, Milchsäurenitril, Phenol-Acetonitril, 2-Chlorbenzonitril, 2,6-Dichlorbenzonitril, Isophthalsäuredinitril und Terephthalsäuredinitril, insbesondere aliphatische α,ω-Dinitrile, wie z.B. Bernsteinsäuredinitril, Glutarsäuredinitril, Adipinsäuredinitril, Pimelinsäuredinitril und Korksäuredinitril, oder Aminonitrile, wie z.B. 4-Aminobutansäurenitril, 5-Aminopentansäurenitril, 6-Aminohexansäurenitril, 7-Aminoheptansäurenitril und 8-Aminooctansäurenitril.

Ferner lassen sich mit dem erfindungsgemäßen Verfahren folgende Umsetzungen durchführen:
die Hydrierung von aromatischen Verbindungen, wie z.B. Benzol, Toluolen, Xylolen, Naphthalinen sowie substituierten Derivaten davon, zu den entsprechenden alicyclischen Verbindungen; die Hydrierung von Alkenen oder Alkinen, wie z.B. Ethylen, Propylen, 1-, 2-Buten, 1-, 2-, 3- und 4-Octen, Butadien und Hexatrien zu den entsprechenden Alkanen; die Hydrierung von Nitroalkanen, wie z.B. Nitroethan, Nitromethan, Nitropropan und 1,1-Dinitroethan zu den entsprechenden Aminen;
die Hydrierung von Iminen, wie z.B. Chinoniminen, Ketiminen, Keteniminen oder aliphatischen Iminen, wie z.B. Propanimin, Hexanimin; die Dehalogenierung von Halogenatome enthaltenden organischen Verbindungen, insbesondere von aromatischen halogenhaltigen Verbindungen, wie z.B. Chlor- und Brombenzol, Brom- und Chlortoluolen sowie Chlor- und Bromxylolen, wobei dort auch jeweils mit mehreren Halogenatomen substituierte Verbindungen eingesetzt werden können; die aminierende Hydrierung von z.B. Alkoholen, wie z.B. Vinylalkohol.

Ferner lassen sich Oxime mit dem erfindungsgemäßen Verfahren umsetzen oder sekundäre Amine aus Ketonen und primären Aminen herstellen.

### Polymere

Die erfindungsgemäßen Katalysatoren können auch für Hydrierungen, Dehydrierungen, Hydrogenolysen, aminierende Hydrierungen und Dehalogenierungen von großen Molekülen, vorzugsweise von Polymeren, verwendet werden.

Demgemäß betrifft die vorliegende Erfindung auch ein Verfahren zur Umsetzung eines Polymers, das mindestens eine katalytisch umsetzbare Gruppe aufweist, in Gegenwart der oben beschriebenen Katalysatoren, wobei die Hydrierung von C=O-Gruppen aufweisenden Polymeren, wie z.B. Polyester von Dicarbonsäuren, ungesättigten Monocarbonsäuren, wie z.B. Poly(meth)acrylaten, Olefin/CO-Copolymeren oder Polyketonen, die Hydrierung von Nitrilgruppen aufweisenden Polymeren, wie z.B. Styrol-Butadien-Copolymeren, Acrylnitril-Copolymeren, die aminierende Hydrierung von Polyvinylalkoholen und Polyketonen, sowie die Hydrierung von C-C-Mehrfachbindungen aufweisenden Polymeren bevorzugt ist.

Insbesondere betrifft die vorliegende Erfindung ein Verfahren zur Hydrierung eines Polymers, das mindestens eine C=O-Gruppe aufweist, eines Polymers, das mindestens eine C≡N-Gruppe aufweist oder eines Polymers, das mindestens eine C-C-Mehrfachbindung aufweist, in Gegenwart des oben genannten Katalysators.

Der Begriff *"Polymer das mindestens eine katalytisch umsetzbare Einheit aufweist"* steht für alle Polymere, die derartige Einheiten aufweisen, insbesondere für Polymere, die Einheiten der Strukturen (I) bis (VIII), wie oben bezüglich der monomeren Verbindungen definiert, oder ein Halogenatom aufweisen. Dabei ist es selbstverständlich, daß die hier in Rede stehenden Polymere die jeweilige Einheit mindestens einmal enthalten und sich auch innerhalb des erfindungsgemäß umgesetzten Polymers eine oder mehrere Einheiten von zwei oder mehr der Strukturen (I) bis (VIII) befinden können.

Das Gewichtsmittel des Molekulargewichts der im erfindungsgemäßen Verfahren umzusetzenden Polymere beträgt im allgemeinen ungefähr 500 bis ungefähr 500.000, vorzugsweise ungefähr 1.000 bis ungefähr 100.000 und weiter bevorzugt ungefähr 1.000 bis ungefähr 50.000. Es können jedoch auch Polymere mit höherem Molekulargewicht bis hin zu einer oder mehreren Millionen umgesetzt werden. Sofern Polymere, die mindestens eine C-C-Mehrfachbindung enthalten, d.h. Polymere, die wiederkehrende Einheiten der oben definierten Strukturen (I) und (II) aufweisen, umgesetzt werden, besitzen diese im allgemeinen Gewichtsmittel des Molekulargewichts von ungefähr 5.000 bis ungefähr 1.000.000, vorzugsweise 50.000 bis 500.000 und weiter bevorzugt 150.000 bis 500.000.

Vorzugsweise werden olefinische Doppelbindungen enthaltende Polymere eingesetzt, wobei weiter bevorzugt Dien-Einheiten enthaltende Polymere und vinylaromatische und Dien-Einheiten aufweisende Copolymere eingesetzt werden.

Gebräuchliche Dien-Einheiten schließen alle herkömmlichen, mehrfach ungesättigten Monomere mit drei bis zwölf Kohlenstoffatomen ein, wobei Butadien bevorzugt ist.

Sofern Copolymere hydriert werden sollen, können diese eine statistische, blockartige oder kegelförmige (*"tapered" )* Verteilung der wiederkehrenden Einheiten aufweisen.

Aromatische Monomere, die im Rahmen der erfindungsgemäß zu hydrierenden Polymere enthalten sein können, schließen mono- und polyvinylsubstituierte aromatische Verbindungen ein, wobei Styrol, α-Methylstyrol, Acrylnitril, Methacrylnitril und Divinylbenzol vorzugsweise eingesetzt werden. Darüber hinaus können auch Mischungen von vinylaromatischen und/oder Diolefin-Monomeren, gegebenenfalls zusammen mit herkömmlichen olefinischen Monomeren, in den zu hydrierenden Polymeren vorhanden sein.

Als Beispiele für im Rahmen des erfindungsgemäßen Verfahrens umsetzbare, vorzugsweise hydrierbare Polymere sind die folgenden zu nennen:

Polymere mit C―C-Doppelbindungen, wie z.B. Polybutadiene, wie z.B. Poly(2,3-dimethylbutadien), Polyisopren, Polyacetylene und Polycyclopenta- und -hexadiene; Polymere mit C―C-Dreifachbindungen, wie z.B. Polydiatetylene; Polymere mit aromatischen Gruppen, wie z.B. Polystyrol, Acrylnitril-Butadien-Styrol-Terpolymere und Styrol-Acrylnitril-Copolymere; Polymere mit C―N-Dreifachbindungen, wie z.B. Polyacrylnitril, Polyacrylnitril-Copolymere mit z.B. Vinylchlorid, Vinylidenchlorid, Vinylacetat oder (Meth)acrylsäureestern oder Gemischen aus zwei oder mehr davon als Comonomere; Polymere mit C―O-Doppelbindungen, wie z.B. Polyester, Polyacrylamide, Polyacrylsäuren, Polyharnstoffe und Polyketone; Polymere mit C―S-Doppelbindungen, wie z.B. Polysulfone und Polyethersulfone; halogenhaltige Polymere, wie z.B. Polyvinylchlorid und Polyvinylidenchlorid; sowie Nitrogruppen enthaltende Polymere, die durch Nitrierung von z.B. Polyolefinen durch polymeranaloge Umsetzung erhalten werden können.

Weitere Beispiele für im Rahmen der vorliegenden Erfindung bevorzugt eingesetzte Polymere schließen Polyisopren, Polybutadien, Ethylen/CO-Copolymere, Propylen/CO-Copolymere, Polymethyl(meth)acrylat, Polyterephthalate, Polyadipate, Styrol-Butadien-Copolymere, Acrylnitril-Butadien-Copolymere, Acrylnitril-Styrol-Butadien-Copolymere, Styrol-Isopren-Styrol-Triblockcopolymere, Styrol-Butadien-Styrol-Triblockcopolymere und Styrol-Butadien-Styrol-Sternblock-Copolymere ein.

Im allgemeinen findet eine vollständige Umsetzung der eingesetzten Edukte statt. Die Umsetzung, vorzugsweise Hydrierung, kann jedoch auch so durchgeführt werden, daß durch geeignete Wahl von Temperatur, z.B. H₂-Druck und H₂-Menge, lediglich eine Art von hydrierbaren Gruppen hydriert wird, während die andere Art von hydrierbaren Gruppen nicht hydriert wird.

Besonders geeignet ist das erfindungsgemäße Verfahren zur Umsetzung, vorzugsweise Hydrierung, von Polymeren, die Einheiten verschiedener Strukturen, wie oben definiert, enthalten, z.B. Polymere, die sowohl C-C-Mehrfachbindungen als auch C=O-Gruppen und/oder C≡N-Gruppen aufweisen, da die im Rahmen des erfindungsgemäßen Verfahrens verwendeten Katalysatoren in der Lage sind, zunächst die C-C-Mehrfachbindungen selektiv umzusetzen, d.h. eine Umsetzung dieser Gruppen von ungefähr 60 bis 100% zu erreichen, während zunächst gleichzeitig die C=O- und/oder C≡N-Gruppen und/oder aromatischen Bereiche zu weniger als 25% und im allgemeinen in einem Bereich von 0 bis ungefähr 7%, bevorzugt 0 bis ungefähr 2% umgesetzt, z.B. hydriert werden.

Ferner eignet sich das erfindungsgemäße Verfahren besonders gut zur Hydrierung von Polymeren mit hohem Molekulargewicht, die sowohl C-C-Mehrfachbindungen als auch aromatische Gruppen aufweisen, da die im Rahmen des erfindungsgemäßen Verfahrens verwendeten Katalysatoren in der Lage sind, eine Hydrierung der C-C-Mehrfachbindungen, z.B. ethylenisch ungesättigter Bereiche, von ungefähr 60 bis 100% zu erreichen, während gleichzeitig die aromatischen Bereiche zu weniger als 25% und im allgemeinen in einem Bereich von 0 bis ungefähr 7%, bevorzugt 0 bis ungefähr 2%, hydriert werden.

Nach Beendigung der Umsetzung der in den Polymeren vorhandenen C-C-Mehrfachbindungen ist es selbstverständlich möglich, durch weitere Zufuhr von Wasserstoff auch die restlichen, im Polymer vorhandenen ungesättigten Gruppen, wie z.B. C=O-Gruppen, nahezu quantitativ umzusetzen, z.B. zu hydrieren.

Das erfindungsgemäße Verfahren kann sowohl für bereits isolierte als auch für lebende Polymere eingesetzt werden.

### Träger

Die zur Herstellung der erfindungsgemäß verwendeten Katalysatoren verwendbaren Trägermaterialien besitzen Makroporen. Dabei bezeichnet der Begriff *"Makroporen"* Poren, deren Durchmesser 50 nm übersteigt, entsprechend der Definition in *Pure Applied Chem. 45, S 71 ff,* insbesondere *S. 79 (1976).*

Ferner zeichnen sie sich dadurch aus, daß sie als eine Trägerkomponente Bor(III)oxid in einer Menge von ungefähr 10 bis ungefähr 100 Gew.-%, vorzugsweise ungefähr 30 bis ungefähr 70 Gew.-% und insbesondere ungefähr 40 bis ungefähr 60 Gew.-%, jeweils bezogen auf das Gesamtgewicht des Trägers, umfassen.

Als weitere Trägerkomponenten können prinzipiell alle bei der Katalysatorherstellung bekannten Trägermaterialien eingesetzt werden. Beispielsweise sind zu nennen Aktivkohle, Siliciumcarbid, Aluminiumoxid, Siliciumdioxid, Titandioxid, Zirkoniumdioxid, Magnesiumoxid, Zinkoxid oder deren Gemische, wobei vorzugsweise Aluminiumoxid, Siliciumdioxid, Titandioxid, Zirkoniumdioxid, Magnesiumoxid, Zinkoxid oder deren Gemische, insbesondere Aluminiumoxid oder Zirkoniumdioxid, eingesetzt werden.

Vorzugsweise weisen die Träger eine spezifische Oberfläche von mindestens 3 m²/g, vorzugsweise mindestens 5 m²/g, besonders bevorzugt mindestens 8 m²/g auf, wobei der obere Grenzwert bei 350 m²/g liegt. Die Oberfläche des Trägers wird nach dem BET-Verfahren durch N₂-Adsorption, insbesondere nach DIN 66131, bestimmt.

Vorzugsweise weisen die Träger ein Porenvolumen von 0,1 bis 2,0 ml/g, vorzugsweise 0,2 bis 1,0 ml/g, besonders bevorzugt 0,4 bis 0,8 ml/g auf.

Die Makroporosität des Trägers, d.h. der Anteil des Porenvolumens am Gesamtporenvolumen, das durch Makroporen gebildet wird, beträgt vorzugsweise mindestens 60 %, weiter bevorzugt mindestens 90 % und insbesondere mindestens 99 %, jeweils bezogen aufdas Gesamtporenvolumen des Trägers. Die Bestimmung des Porenvolumens und der Porenvolumenverteilung erfolgt durch Hg-Porosimetrie, insbesondere nach DIN 66133.
Die zur Herstellung der erfindungsgemäß verwendeten Katalysatoren verwendbaren Trägermaterialien werden beispielsweise hergestellt durch Vermischen von Bor(III)oxid und gegebenenfalls einer oder mehreren weiteren Trägerkomponenten mit einem vernetzten, teilweise neutralisierten Polyacrylat, das mindestens das 10fache seines Eigengewichts an Wasser binden kann, und einem Quellmittel, Formen der so erhaltenen Masse, Trocknen und Calcinieren.

Somit betrifft die vorliegende Erfindung auch ein Verfahren zur Herstellung eines Katalysatorträgers, das die folgenden Stufen (i) bis (iv) umfaßt:
(i) Vermischen eines Trägermaterials, das 10 bis 100 Gew.-% Bor(III)oxid umfaßt, mit einem vernetzten, teilweise neutralisierten Polyacrylat, das mindestens das 10fache seines Eigengewichts an Wasserbinden kann, und einem Quellmittel unter Erhalt einer Trägermasse,
(ii) Formen der in Stufe (i) erhaltenen Trägermasse,
(iii) Trocknung der in Stufe (ii) erhaltenen geformten Trägermasse, und
(iv) Calcinieren der in Stufe (iii) erhaltenen getrockneten Trägermasse,
sowie den entsprechenden Katalysatorträger an sich.

Als Polyacrylate werden bevorzugt Homopolymere aus Acrylsäure, aber auch Copolymere verwendet, die mindestens zu 50 Gew.-% aus Acrylsäure aufgebaut sind. Diese Polymere sind teilweise, d.h. zu mindestens 5 %, oder vollständig neutralisiert, vorzugsweise mit Natronlauge. Die Verbindungen sind vernetzt, wobei ionische Wechselwirkungen, Wasserstoffbrückenbindungen und chemische Bindungen diese Vernetzungen bewirken können. Als chemische Vernetzer kommen beispielsweise Diole wie Ethylenglykol, Polyole, Diamine und Diene in Mengen von 0,1 bis 5 Gew.-% des Polymers in Betracht. Solche Polymere können bis zum 1000fachen ihres Eigengewichts an Wasser binden. Sie werden üblicherweise durch radikalische Polymerisation in wäßriger Lösung hergestellt und sind als Verdickungsmittel oder als sogenannte Superabsorber im Handel erhältlich (s. F.L. Buchholz, "Preparation and Structure of Polyacrylates" in Absorbent Polymer Technology, Studies in Polymer Science 8, Elsevier, Amsterdam, 1990, S. 23; EP-A 324 385, US-A 5 149 334, US-A 4 286 082, US 4 295 987, US 4 351 922), deren Inhalt bzgl. der Herstellung der Polyacrylate vollumfänglich in den Kontext der vorliegenden Anmeldung einbezogen wird.

Das Gewichtsverhältnis von Trägermaterial zu Polymer beträgt in der Regel 10:1 bis 500:1. Das Polymer wird mit einem Quellmittel versetzt. Bevorzugt handelt es sich herbei um Wasser oder wäßrige Ammoniaklösungen, es kommen aber alle organischen Stoffe in Betracht, die vom Polymer gebunden werden können, wie C₁-C₆-Alkanole, Di- und Trialkohole wie Glykol, Glycerol und Propandiol, primäre, sekundäre oder tertiäre Amine wie Methyl-, Ethyl-, n-Propyl- und iso-Propylamin. Das Gewichtsverhältnis von Quellmittel zu Polymer beträgt 10:1 bis 300:1, vorzugsweise 30:1 bis 100:1. Der Quellvorgang ist im allgemeinen nach 5 bis 60 Minuten beendet. Trägermaterial, Polymer und Quellmaterial können gleichzeitig vermischt werden. Es hat sich jedoch als zweckmäßig erwiesen, zunächst das Polymer mit dem Quellmittel zu versetzen und nach der Quellung mit dem Trägermaterial zu vermischen. Das Mischen kann in einem Kneter oder Mix-Muller vorgenommen werden.

Die weiteren Verarbeitungsmaßnahmen sind dem Fachmann an sich bekannt. Die nach dem Mischen erhaltene Masse wird geformt, z.B. durch Extrusion im Extruder oder durch Verformen in einer Strangpresse zu Strängen in den gewünschten Abmessungen. Die so erhaltenen Formkörper werden getrocknet, wozu in der Regel Temperaturen von 100 bis 150 °C über 2 bis 24 h angewendet werden. Anschließend werden die Formkörper im allgemeinen über 2 bis 24 h bei 200 bis 800 °C, vorzugsweise 250 bis 550 °C calciniert, wobei die Polymere aus der Trägermatrix entfernt werden.

### Katalysatoren

Die erfindungsgemäßen Katalysatoren enthalten auf erfindungsgemäßen Trägern als Aktivkomponenten ein oder mehrere Metalle der VIII. Nebengruppe des Periodensystems alleine oder zusammen mit mindestens einem Metall der I. oder VII. Nebengruppe des Periodensystems in einer Menge von 0,01 bis 30 Gew.-%, bevorzugt 0,1 bis 5 Gew.-%, besonders bevorzugt 0,2 bis 1 Gew.-%, bezogen auf das Gesamtgewicht des Katalysators. Bevorzugt werden als Metalle der VIII. Nebengruppe des Periodensystems Palladium und/oder Ruthenium eingesetzt, besonders bevorzugt Palladium.

Die Katalysatoren zeichnen sich auch dadurch aus, daß vorzugsweise die Aktivkomponenten über den Träger in Form einer äußeren Schale mit einer Dicke von maximal 500 µm, bevorzugt maximal 200 µm, besonders bevorzugt maximal 100 µm, verteilt sind.

Die Metalloberfläche der Katalysatoren beträgt 0,01 bis 10 m²/g, bevorzugt 0,05 bis 5 m²/g, besonders bevorzugt 0,05 bis 3 m²/g. Die Metalloberfläche wird durch das Chemisorptionsverfahren gemessen, wie es in J. Lemaitre et al., *"Characterization of Heterogeneous Catalysts",* Hrsg. Francis Delanney, Marcel Dekker, New York (1984), S. 310-324, beschrieben ist. In den erfindungsgemäß verwendeten Katalysatoren beträgt das Verhältnis der Oberflächen des Metalls zur Oberfläche des Trägers weniger als 0,07, bevorzugt weniger als 0,05, wobei der untere Grenzwert bei ungefähr 0,0005 liegt.

Die erfindungsgemäß verwendeten Katalysatoren können technisch hergestellt werden durch Auftragen eines oder mehrerer Metalle der VIII. Nebengruppe des Periodensystems auf einen erfindungsgemäßen Träger. Die Auftragung kann durch das Tränken des Trägers mit wäßrigen oder organischen Metallsalzlösungen, durch Aufsprühen von entsprechenden Metallsalzlösungen auf den Träger oder durch andere geeignete Verfahren erreicht werden. Alternativ können die Metallsalze auch bereits bei der Trägerherstellung zugesetzt werden, indem die Metallsalze in dem Quellmittel, das zur Quellung der Polyacrylate bei der Trägerherstellung eingesetzt wird, gelöst werden.

Als Metallsalze der VIII. Nebengruppe des Periodensystems eignen sich die Nitrate, Nitrosylnitrate, Halogenide, Carbonate, Carboxylate, Acetylacetonate, Chlorkomplexe, Nitritokomplexe oder Aminkomplexe der entsprechenden Metalle, bevorzugt die Nitrate, Nitrosylnitrate und Acetylacetonate.

Bei Katalysatoren, die mehrere Metalle der VIII. Nebengruppe des Periodensystems enthalten, können die Metallsalze bzw. Metallsalzlösungen gleichzeitig oder nacheinander aufgebracht werden.

Die mit Metallsalzlösung beschichteten bzw. getränkten Träger werden anschließend getrocknet, wobei Temperaturen zwischen 50 und 150 °C bevorzugt sind. Wahlweise können die getrockneten Träger bei Temperaturen zwischen 200 und 600 °C calciniert werden.

Demgemäß betrifft die vorliegende Erfindung auch einen Katalysator, der als Aktivmetall mindestens ein Metall der VIII. Nebengruppe des Periodensystems alleine oder zusammen mit mindestens einem Metall der I. oder VII. Nebengruppe des Periodensystems in einer Menge von 0,01 bis 30 Gew.-%, bezogen auf das Gesamtgewicht des Katalysators, aufgebracht auf einem Träger, umfaßt, wobei der Träger Makroporen aufweist, dadurch gekennzeichnet, daß der Träger als eine Trägerkomponente Bor(III)oxid in einer Menge von 10 bis 100 Gew.-%, bezogen auf das Gesamtgewicht des Trägers, enthält, sowie einen Katalysator, der die folgenden Parameter aufweist:
- eine Oberfläche des Trägers von mindestens 3 m²/g,
- ein Porenvolumen des Trägers von 0,1 ml/g bis 2,0 ml/g,
- einen Anteil des Porenvolumens am Gesamtporenvolumen des Trägers, der durch Poren mit einem Porendurchmesser > als 50 µm gebildet wird, von mindestens 60 %, und
- eine Verteilung der Aktivkomponenten über den Träger in Form einer äußeren Schale mit einer Dicke von maximal 500 µm.

Weiterbevorzugt weist der Katalysator folgende Spezifikation auf:
- Menge des Bor(III)oxids im Träger: 30 bis 70 Gew.-%,
- Oberfläche des Trägers: mind. 5 m²/g,
- Porenvolumen des Trägers: 0,2 ml/g bis 1,0 ml/g,
- Anteil des Porenvolumens der Poren mit einem Porendurchmesser > 50 nm am Gesamtporenvolumen: mind. 90 %, und
- Verteilung der Aktivkomponente(n) über den Träger in Form einer äußeren Schicht mit einer Dicke von maximal 200 µm.

Insbesondere bevorzugt weist der erfindungsgemäß verwendete Katalysator die folgende Spezifikation auf:
- Menge des Bor(III)oxids im Träger: 40 bis 60 Gew.-%,
- Oberfläche des Trägers: mind. 8 m²/g,
- Porenvolumen des Trägers: 0,4 ml/g bis 0,8 ml/g,
- Anteil des Porenvolumens der Poren mit einem Porendurchmesser > 50 nm am Gesamtporenvolumen: mind. 99 %, und
- Verteilung der Aktivkomponente(n) über den Träger in Form einer äußeren Schicht mit einer Dicke von maximal 100 µm.

Wie sich aus obigem ergibt, betrifft die vorliegende Erfindung ferner ein Verfahren zur Herstellung eines Katalysators, wie oben definiert, das die folgenden Stufen (v) bis (vii) umfaßt:
(v) Herstellen eines Katalysatorträgers wie oben definiert,
(vi) Inkontaktbringen des Trägers mit einer Lösung oder einer Suspension mindestens eines Metallsalzes mindestens eines Metalls der VIII. Nebengruppe des Periodensystems alleine oder eines Gemischs mindestens eines Metallsalzes mindestens eines Metalls der VIII. Nebengruppe und mindestens eines Metallsalzes mindestens eines Metalls der I. oder VII. Nebengruppe des Periodensystems in einer Art und Weise, daß die Gesamtmenge des mindestens einen Aktivmetalls des Periodensystems 0,01 bis 30 Gew.-%, bezogen auf das Gesamtgewicht des Katalysators, beträgt sowie
(vii) Trocknung und ggf. Calcinierung des getrockneten Katalysators.

### Lösungs- oder Verdünnungsmittel

Beim erfindungsgemäßen Verfahren kann die Umsetzung, vorzugsweise Hydrierung, unter Abwesenheit eines Lösungs- oder Verdünnungsmittels durchgeführt werden, d.h. es ist nicht erforderlich, die Umsetzung in Lösung durchzuführen.

Es kann auch die Schmelze eines Polymers direkt umgesetzt werden.

Vorzugsweise wird jedoch ein Lösungs- oder Verdünnungsmittel eingesetzt. Als Lösungs- oder Verdünnungsmittel kann jedes geeignete Lösungs- oder Verdünnungsmittel eingesetzt werden. Die Auswahl ist dabei nicht kritisch. Beispielsweise können die Lösungs- oder Verdünnungsmittel auch geringe Mengen an Wasser enthalten.

Bei der Umsetzung, vorzugsweise Hydrierung, einer aromatischen Verbindung, in der mindestens eine Hydroxylgruppe an einen aromatischen Kern gebunden ist, schließen Beispiele geeigneter Lösungs- oder Verdünnungsmittel die folgenden ein:

Geradkettige oder cyclische Ether, wie beispielsweise Tetrahydrofüran oder Dioxan, sowie aliphatische Alkohole, in denen der Alkylrest vorzugsweise 1 bis 10 Kohlenstoffatome, insbesondere 3 bis 6 Kohlenstoffatome, aufweist.

Beispiele bevorzugt verwendbarer Alkohole sind i-Propanol, n-Butanol, i-Butanol und n-Hexanol.

Gemische dieser oder anderer Lösungs- oder Verdünnungsmittel können ebenfalls verwendet werden.

Bei der Umsetzung, vorzugsweise Hydrierung, einer aromatischen Verbindung, in der mindestens eine Aminogruppe an einen aromatischen Kern gebunden ist, schließen Beispiele geeigneter Lösungs- oder Verdünnungsmittel die folgenden ein:

Geradkettige oder cyclische Ether, wie beispielsweise Tetrahydrofuran oder Dioxan, sowie Ammoniak und Mono- oder Dialkylamine, in denen der Alkylrest vorzugsweise 1 bis 3 Kohlenstoffatome aufweist, wie z.B. Methyl-, Ethyl-, Propylamin oder die entsprechenden Dialkylamine.

Gemische dieser oder anderer Lösungs- oder Verdünnungsmittel können ebenfalls verwendet werden.

In beiden obigen Ausführungsformen ist die Menge des eingesetzten Lösungs- oder Verdünnungsmittels nicht in besonderer Weise beschränkt und kann je nach Bedarf frei gewählt werden, wobei jedoch solche Mengen bevorzugt sind, die zu einer 10 bis 70 gew.-%igen Lösung der zur Hydrierung vorgesehenen Verbindung führen.

Besonders bevorzugt wird im Rahmen des erfindungsgemäßen Verfahrens das bei der Umsetzung, vorzugsweise Hydrierung, dieses Verfahrens gebildete Produkt als Lösungsmittel eingesetzt, gegebenenfalls neben anderen Lösungs- oder Verdünnungsmitteln. In diesem Fall kann ein Teil des im Verfahren gebildeten Produktes den umzusetzenden, vorzugsweise zu hydrierenden Verbindungen beigemischt werden. Bezogen auf das Gewicht der zur Umsetzung, vorzugsweise Hydrierung, vorgesehenen aromatischen Verbindungen wird vorzugsweise die 1- bis 30-fache, besonders bevorzugt die 5- bis 20fache, insbesondere die 5- bis 10-fache Menge des Umsetzungsproduktes als Lösungs- oder Verdünnungsmittel zugemischt.

Auch für die anderen erfindungsgemäß umsetzbaren Verbindungen gilt das oben Gesagte, wobei auch dort keine Beschränkungen bezüglich der Lösungs- und Verdünnungsmittel bestehen.

Bei der Umsetzung, vorzugsweise Hydrierung, von Polymeren schließen Beispiele geeigneter Lösungs- oder Verdünnungsmittel die folgenden ein:

Kohlenwasserstoffe, wie z.B. Hexan, Cyclohexan, Methylcyclohexan, Heptan, Octan, Toluol, Xylol usw., und geradkettige oder cyclische Ether, wie z.B. Tetrahydrofuran, Dioxan, Dibutylether, Methyl-tert-Butylether usw., Ketone, wie z.B. Methylethylketon und Aceton, Ester, wie z.B. Ethylacetat, oder Amide, wie z.B. DMF und N-Methylpyrrolidon.

Vorzugsweise werden Cyclohexan, Toluol oder THF eingesetzt. Gemische dieser und anderer Lösungs- und Verdünnungsmittel können ebenfalls verwendet werden.

Sofern das Polymer durch Lösungspolymerisation erhalten wurde, kann die das Polymer enthaltende resultierende Lösung direkt zur Umsetzung im erfindungsgemäßen Verfahren eingesetzt werden.

Die Menge des eingesetzten Lösungs- oder Verdünnungsmittels ist im Rahmen des erfindungsgemäßen Verfahrens nicht in besonderer Weise beschränkt und kann je nach Bedarf frei gewählt werden, wobei jedoch solche Mengen bevorzugt sind, die zu einer 1 bis 70 gew-%igen, vorzugsweise 1 bis 40 gew.-%igen Lösung des zur Umsetzung vorgesehenen Polymers führen.

### Umsetzung

Nachfolgend wird die Umsetzung am Beispiel einer Hydrierung beschrieben, wobei - sofern eine Dehydrierung oder eine Oxidation durchgeführt werden soll - anstelle von Wasserstoff bzw. wasserstoffhaltigen Gasen gasförmige Kohlenwasserstoffe bzw. sauerstoffhaltige Gase unter den nachstehend beschriebenen Bedingungen verwendet werden können.

Die Hydrierung wird bei geeigneten Drücken und Temperaturen durchgeführt. Bevorzugt sind Drücke oberhalb von ungefähr 2 x 10⁶ Pa, vorzugsweise oberhalb von ungefähr 5 x 10⁶ Pa, insbesondere von ungefähr 1 x 10⁷ bis ungefähr 3 x 10⁷ Pa. Bevorzugte Temperaturen liegen in einem Bereich von ungefähr 30 bis ungefähr 250 °C vorzugsweise von ungefähr 100 bis ungefähr 220 °C und insbesondere bei ungefähr 150 bis ungefähr 200 °C.

Das Hydrierungsverfahren kann kontinuierlich oder in Art eines Batch-Verfahrens durchgeführt werden. Beim kontinuierlichen Verfahren kann dabei ein Teil des den Reaktor verlassenden Hydrierungsproduktes dem Reaktorzulauf vor dem Reaktor zugeführt werden. Dabei wird eine solche Menge des den Reaktor verlassenden Hydrierungsprodukts als Lösungsmittel rückgeführt, daß die im Unterabschnitt "Lösungs- und Verdünnungsmittel" genannten Mengenverhältnisse erreicht werden. Die verbleibende Menge an Hydrierungsprodukt wird abgezogen.

Bei kontinuierlicher Prozeßführung beträgt die Menge der zur Hydrierung vorgesehenen Verbindung bzw. Verbindungen vorzugsweise ungefähr 0,05 bis ungefähr 3 kg pro Liter Katalysator pro Stunde, weiter bevorzugt ungefähr 0,1 bis ungefähr 1 kg pro Liter Katalysator pro Stunde.

Als Hydriergase können beliebige Gase verwendet werden, die freien Wasserstoff enthalten und keine schädlichen Mengen an Katalysatorgiften, wie beispielsweise CO, aufweisen. Beispielsweise können Reformerabgase verwendet werden. Vorzugsweise wird reiner Wasserstoff als Hydriergas verwendet.

Je nach Reaktionsbedingungen kann bei den zusätzlich durch mindestens einen ggf. substituierten C₁₋₁₀- und/oder -Alkoxyrest substituierten Phenolen und Aminen je nach Realktionsbedingungen (Temperatur, Lösungsmittel) das erhaltene Isomerenverhältnis von cis- zu trans-konfigurierten Produkten in einem weiten Bereich variiert werden.

Sofern eine aromatische Verbindung, in der mindestens eine Aminogruppe an einen aromatischen Kern gebunden ist, mittels des erfindungsgemäßen Katalysators hydriert werden soll, kann die Hydrierung auch in Gegenwart von Ammoniak oder Dialkylaminen, beispielsweise Methylamin, Ethylamin, Propylamin oder Dimethylamin, Diethylamin oder Dipropylamin durchgeführt werden. Dabei werden geeignete Mengen an Ammoniak oder Mono- oder Dialkylamin eingesetzt, die vorzugsweise bei ungefähr 0,5 bis ungefähr 50 Gewichtsteilen, besonders bevorzugt bei ungefähr 1 bis ungefähr 20 Gewichtsteilen, jeweils bezogen auf 100 Gewichtsteile der zur Hydrierung vorgesehenen Verbindung oder Verbindungen, eingesetzt. Besonders bevorzugt werden wasserfreier Ammoniak oder wasserfreie Amine eingesetzt.

Für Oxidationen wird im allgemeinen Luft oder reiner Sauerstoff verwendet. Für Dehydrierungen werden die üblicherweise verwendeten Kohlenwasserstoffe, insbesondere Methan bzw. Erdgas, eingesetzt.

Die Erfindung wird im folgenden anhand von einigen Ausführungsbeispielen näher erläutert.

### BEISPIELE

### Herstellung Katalysator A

150 ml Wasser, 20 ml wäßrige 25 gew.-%ige Ammoniaklösung und 6 g eines Polyacrylates vom Typ "Aqualic CA W3®" wurden vermischt. Nach 1 h war ein gelartige Quellmasse entstanden, die anschließend mit 125 g Aluminiumoxid und 125 g Bor(III)oxid versetzt und unter Zugabe weiterer 90 ml 25 gew.-%iger Ammoniaklösung 2 h verknetet wurde. Die Masse wurde bei 45 bar Preßdruck in einer Strangpresse zu 2,5 mm Strängen verformt, 16 h bei 120 °C getrocknet und 4 h bei 300 °C calciniert. Der so hergestellt Träger bestand zu je 50 Gew.-% aus Bor(III)oxid und Aluminiumoxid. Die BET-Oberfläche betrug 9,7 m²/g. Das Porenvolumen lag bei 0,56 ml/ und die Makroporosität betrug 100 %, d.h. der Träger besaß ausschließlich Makroporen.

250 g des so hergestellten Bor(III)oxid/Aluminiumoxid-Trägers wurden viermal mit je 138 ml einer Lösung, die durch Auflösen von jeweils 0,91 Palladium(II)acetylacetonat in jeweils 138 ml Aceton hergestellt worden war, getränkt. Nach jedem Tränkschritt wurde der getränkte Träger 30 Minuten bei 70 °C getrocknet. Nach der vierten Trocknung wurde eine Calcinierung bei 200 °C über 2 h durchgeführt. Der so hergestellte Palladiumkatalysator besaß einen Palladiumgehalt von 0,5 Gew.-%. Die Palladiumkomponente war über den Träger in Form einer äußeren Schale mit einer Dicke von 50 µm verteilt. Die Palladiumoberfläche des Katalysators betrug 0,3 m²/g.

### Beispiel 1

Ein Rohrreaktor wurde mit 250 ml Katalysator A befüllt. Zur Aktivierung wurde der Katalysator bei einer Temperatur von 120 °C mit einem Gasstrom bestehend aus 50 Vol.-% H₂ und 50 Vol.-% N₂ behandelt. Anschließend wurde bei einer Temperatur von 120 °C, einem Druck von 120 bar und einem H₂-Strom von 40 l/h eine 10 gew.-%ige Lösung eines Styrol-Butadien-Copolymers vom Typ "Styroflex®" mit einem Gewichtsmittel des Molekulargewichts von 300.000 in Cyclohexan mit einer Belastung von 0,01 kg/(l * h) von unten nach oben über den Katalysator gefahren. Der Umsatz bzgl. der olefinischen Doppelbindungen lag bei 86%. Die aromatischen Ringe im Polymer wurden nicht hydriert. Es wurde kein Molekulargewichtabbau festgestellt.

### Beispiel 2

Ein Rohrreaktor wurde mit 250 ml Katalysator A befüllt. Zur Aktivierung wurde der Katalysator bei einer Temperatur von 120 °C mit einem Gasstrom bestehend aus 50 Vol.-% H₂ und 50 Vol.-% N₂ behandelt. Anschließend wurde bei einer Temperatur von 120 °C, einem Druck von 120 bar und einem H₂-Strom von 40 l/h eine 10 gew.-%ige Lösung eines Styrol-Butadien-Copolymers vom Typ "Styroflex®" mit einem Gewichtsmittel des Molekulargewichts von 300.000 in Cyclohexan mit einer Belastung von 0,1 kg/(l * h) von unten nach oben über den Katalysator gefahren. Der Umsatz bzgl. der olefinischen Doppelbindungen lag bei 66%. Die aromatischen Ringe im Polymer wurden nicht hydriert. Es wurde kein Molekulargewichtabbau festgestellt.

## Patentansprüche

1. Verfahren zur Umsetzung einer organischen Verbindung in Gegenwart eines Katalysators, der als Aktivmetall mindestens ein Metall der VIII. Nebengruppe des Periodensystems alleine oder zusammen mit mindestens einem Metall der I. oder VII. Nebengruppe des Periodensystems in einer Menge von 0,01 bis 30 Gew.-%, bezogen auf das Gesamtgewicht des Katalysators, aufgebracht auf einem Träger, umfaßt, wobei der Träger Makroporen aufweist, dadurch gekennzeichnet, daß der Träger als eine Trägerkomponente Bor(III)oxid in einer Menge von 10 bis 100 Gew.-%, bezogen auf das Gesamtgewicht des Trägers, enthält.

2. Verfahren nach Anspruch 1, dadurch gekennzeichnet, daß die spezifische Oberfläche des Trägers mindestens 3 m²/g beträgt.

3. Verfahren nach Anspruch 1 oder 2, dadurch gekennzeichnet, daß das Porenvolumen des Trägers im Bereich von 0,1 ml/g bis 2,0 ml/g liegt.

4. Verfahren nach einem der Ansprüche 1 bis 3, dadurch gekennzeichnet, daß der Anteil des Porenvolumens am Gesamtporenvolumen des Trägers, der durch Poren mit einem Porendurchmesser von mehr als 50 nm gebildet wird, mindestens 60 % beträgt.

5. Verfahren nach einem der Ansprüche 1 bis 4, dadurch gekennzeichnet, daß das oder die Aktivmetall(e) über den Träger in Form einer äußeren Schale mit einer Dicke von maximal 500 µm verteilt sind.

6. Verfahren nach einem der Ansprüche 1 bis 5, dadurch gekennzeichnet, daß der Katalysator die folgenden Parameter aufweist:
- eine Oberfläche des Trägers von mindestens 3 m²/g,
- ein Porenvolumen des Trägers von 0,1 ml/g bis 2,0 ml/g,
- einen Anteil des Porenvolumens am Gesamtporenvolumen des Trägers, der durch Poren mit einem Porendurchmesser > 50 µm gebildet wird, von mindestens 60%, und
- eine Verteilung des Aktivmetalls oder der Aktivmetalle über den Träger in Form einer äußeren Schale mit einer Dicke von maximal 500 µm.

7. Verfahren nach einem der Ansprüche 1 bis 6, wobei als Metall der VIII. Nebengruppe des Periodensystems Ruthenium oder Palladium oder ein Gemisch davon eingesetzt wird.

8. Verfahren nach einem der Ansprüche 1 bis 7, wobei der Träger neben Bor(III)oxid als weitere Trägerkomponente Aluminiumoxid, Siliciumdioxid, Titandioxid, Zirkoniumdioxid, Magnesiumoxid, Zinkoxid oder ein Gemisch aus zwei oder mehr davon enthält.

9. Verfahren nach einem der Ansprüche 1 bis 8, dadurch gekennzeichnet, daß die Umsetzung eine Hydrierung, Dehydrierung, Hydrogenolyse, aminierende Hydrierung oder Dehalogenierung ist.

10. Verfahren nach einem der Ansprüche 1 bis 9, dadurch gekennzeichnet, daß die Umsetzung eine Hydrierung eines Polymers ausgewählt aus der Gruppe bestehend aus Polyisopren, Polybutadien, einem Styrol-Butadien-Copolymer, einem Acrylnitril-Butadien-Copolymer, einem Acrylnitril-Styrol-Butadien-Terpolymer, einem Styrol-Isopren-Styrol-Triblockcopolymer, einem Styrol-Butadien-Styrol-Triblockcopolymer und einem Styrol-Butadien-Styrol-Sternblockcopolymer ist.

11. Katalysator, der als Aktivmetall mindestens ein Metall der VIII. Nebengruppe des Periodensystems alleine oder zusammen mit mindestens einem Metall der I. oder VII. Nebengruppe des Periodensystems in einer Menge von 0,01 bis 30 Gew.-%, bezogen auf das Gesamtgewicht des Katalysators, aufgebracht auf einem Träger, umfaßt, wobei der Träger Makroporen aufweist, dadurch gekennzeichnet, daß der Träger als eine Trägerkomponente Bor(III)oxid in einer Menge von 10 bis 100 Gew.-%, bezogen auf das Gesamtgewicht des Trägers, enthält.

12. Katalysator nach Anspruch 11, der die folgenden Parameter aufweist:
- eine Oberfläche des Trägers von mindestens 3 m²/g,
- ein Porenvolumen des Trägers von 0,1 ml/g bis 2,0 ml/g,
- einen Anteil des Porenvolumens am Gesamtporenvolumen des Trägers, der durch Poren mit einem Porendurchmesser > 50 µm gebildet wird, von mindestens 60%, und
- eine Verteilung der Aktivkomponenten über den Träger in Form einer äußeren Schale mit einer Dicke von maximal 500 µm.

13. Verfahren zur Herstellung eines Katalysatorträgers, das die folgenden Stufen (i) bis (iv) umfaßt:
(i) Vermischen eines Trägermaterials, das 10 bis 100 Gew.-% Bor(III)oxid umfaßt, mit einem vernetzten, teilweise neutralisierten Polyacrylat, das mindestens das 10fache seines Eigengewichts an Wasser binden kann, und einem Quellmittel unter Erhalt einer Trägermasse,
(ii) Formen der in Stufe (i) erhaltenen Trägermasse,
(iii) Trocknung der in Stufe (ii) erhaltenen geformten Trägermasse, und
(iv) Calcinieren der in Stufe (iii) erhaltenen getrockneten Trägermasse.

14. Verfahren zur Herstellung eines Katalysators gemäß Anspruch 11 oder 12, oder eines Katalysators, wie in einem der Ansprüche 1 bis 8 definiert, das die folgenden Stufen (v) bis (vii) umfaßt:
(v) Herstellen eines Katalysatorträgers gemäß dem Verfahren gemäß Anspruch 13,
(vi) Inkontaktbringen des Trägers mit einer Lösung oder einer Suspension mindestens eines Metallsalzes mindestens eines Metalls der VIII. Nebengruppe des Periodensystems alleine oder eines Gemischs mindestens eines Metallsalzes mindestens eines Metalls der VIII. Nebengruppe und mindestens eines Metallsalzes mindestens eines Metalls der I. oder VII. Nebengruppe des Periodensystems in einer Art und Weise, daß die Gesamtmenge des mindestens einen Aktivmetalls des Periodensystems 0,01 bis 30 Gew.-%, bezogen auf das Gesamtgewicht des Katalysators, beträgt, sowie
(vii) Trocknung und ggf. Calcinierung des getrockneten Katalysators.
